(19) **Europäisches Patentamt**

**European Patent Office**

**Office européen des brevets**

(11) **EP 0 877 007 B1**

(12) **EUROPEAN PATENT SPECIFICATION**

(45) Date of publication and mention
of the grant of the patent:
**30.06.2004 Bulletin 2004/27**

(21) Application number: **96909182.6**

(22) Date of filing: **16.04.1996**

(51) Int Cl.$^7$: **C04B 7/52**

(86) International application number:
**PCT/ES1996/000086**

(87) International publication number:
**WO 1997/038947 (23.10.1997 Gazette 1997/45)**

(54) **HYDRAULIC CEMENT**

HYDRAULISCHER ZEMENT

CIMENT HYDRAULIQUE

(84) Designated Contracting States:
**AT BE CH DE DK ES FI FR GB GR IE IT LI LU MC NL PT SE**

(43) Date of publication of application:
**11.11.1998 Bulletin 1998/46**

(73) Proprietor: **Firebrick Trading, S.L.**
**28001 Madrid (ES)**

(72) Inventors:
  • **BASHLIKOV, Nikolay Fedorovich**
    **Moscú, 109428 (RU)**
  • **ZUBEKHIM, Sergey Alexeevich**
    **Moscú, 109428 (RU)**
  • **SERDYUK, Valery Nikolaevich**
    **Moscú, 109428 (RU)**
  • **FALIKMAN, Vjatcheslav Ruminovich**
    **Moscú, 109428 (RU)**
  • **YUDOVITH, Boris Emmanuilovich**
    **Moscú, 109428 (RU)**
  • **CADAVAL, Alfonso**
    **E-20109 La Moraleja/ Madrid (ES)**
  • **SULEIMANOV GONZALEZ, Nagmet**
    **deceased (ES)**
  • **EBERHARDT, Claudio Augusto**
    **Talalpan, Mexico, D.F. (MX)**
  • **MORENO, Jaime**
    **Chicago, IL 60645 (US)**

(74) Representative: **Carpintero Lopez, Francisco**
**Herrero & Asociados, S.L.,**
**Alcalá, 35**
**28014 Madrid (ES)**

(56) References cited:
**GB-A- 1 154 330          US-A- 4 160 674**

  • **P.C. A TCIN ET AL.: "Retardation effect of superplastcizer on different cement fractions" CEMENT AND CONCRETE RESEARCH, vol. 17, 1987, pages 995-999, XP002008685 USA**

**Description**

This invention relates to cement compositions characterized by low water demand, high strength and reduced fragility.

BACKGROUND OF THE INVENTION

Hydraulic cements, to which Portland cement belongs, harden in a water, under the alternate wetting and drying and in the air, under conditions that practically cover the whole sphere of human activity. Such cement, being one of the most important components of the national product of many countries, is constantly being improved in its technical properties. During the twentieth century, for instance, the average strength of commercial cements, evaluated by modern methods of testing, has increased by 3-4 times. But at the same time some cement plants in 1930 were producing cements just as strong as modern average level. The strength increase of commercial Portland cement was based on using of a several technological factors:

1) Improvement of a composition, particularly increase of tricalcium silicate, or alite, content in the clinker, with gross formula 3CaO x $SiO_2$ (or by reduced notation, adopted in cement chemistry, where A = $Al_2O_3$, C = CaO, $F_1$ = $Fe_2O_3$, H = $H_2O$, K = $K_2O$, M = MgO, N = $Na_2O$, R = $R_2O$ = $Na_2O$ + 0,658 $K_2O$, S = $SiO_2$ with gross formula $C_3S$) - by lowering content of low activity dicalcium silicate, or belite $C_2S$; by increase of content of active, especially in three first days of water hardening, mineral tricalcium aluminate $C_3A$; and by reducing the content of more passive mineral $C_4AF$. In the mid 1970s optimum was reached: composition $C_3S$, 60-70 weight percent, $C_3A$, 6-8 weight percent;
2) Improving the structure of Portland cement clinker and, consequently, structure of the cement particles; cement having optimal performance properties being produced out of clinker with alite crystals having average sizes 25-40 μm and belite, 30-40 μm;
3) Improvement of particle size distribution of cement. In the mid 1960s it became evident the optimal ratio interval should be present between the percentages of the fine fraction of Portland cement (from 0.03 to 5 μm) and its medium fraction (from 5.1 to 30 μm), but coarse fraction (over 30 and especially over 60 μm) should be present in the cement composition in a minimum content to prevent negative influence on its hydration and hardening by the water absorption from the products of hydration of fine and medium fractions. In this case the increase of specific surface of cement, evaluated by the air permeability method suggested by F.M.Lea and T.Parker and now known as R. Blaine modification in America, Great Britain, France, Spain and Italy, as R.Dikkerhoff in Germany and as V.V.Tovarov and G.S.Khodakov in the ex-USSR, approximately from 2800-3000 to 4500 $cm^2$/g always led to a gain in strength because of acceleration of reaction a gain with the water in age of 1-3 days proportionally to the increase of surface area. But this strength gain was lowered to 28 days, or in so-called standard strength, determined by mortar samples with cement: Sand ratio 1:3 and constant W/C = 0.4-0.6, usually 0.5 or constant consistency (last rule was generally accepted in the beginning of the century and now it is in law just in ex-USSR countries, Mongolia and China only; and
4) Optimization of clinker:calcium sulfate relation in cement.

All the potentials of cement strength increase, due to these factors, were exhausted completely by the mid 1970s. Maximum standard strength obtained by application of all these factors reached 70-75 N/mm². But the commercially produced Portland cement had the guaranteed maximum standard strength about 10-15 N/mm2 lower.
All of the factors limiting the cement strength are known. To such factors belong the increase of water demand and the fragility of the hydrated cement paste of cement of high specific surface. The most positive role in diminishing the fragility of hardened cement paste was played by active mineral additives, introduced into the cement up to 5-8%. Some reduction of water requirement, increased strength and lowering of fragility of cement paste was obtained by the introduction into the composition of the cement during the grinding of the clinker of plasticizers developed in 1940s in the form of 10-30% water solutions in a quantities of 0.15-0.25 cement weight percent as calculated by dry substance. To such plasticizers belongs soluble salts of products of sulfation of condensed monocyclic aromatic compounds, mainly lignosulfonates byproduct of sulfate method of cellulose and paper manufacture out of wood. Its introduction in liquid form into the cement in the mentioned quantities induced the reduction of water content in the paste of normal consistency determined by the Tetmeyer rod method up to 7-12%. But it does not cause adequate increase of the paste strength because of presence of lignosulfonates "reducing" components - sugars, that lower the degree of $C_3S$ hydration and especially formation of $C_3A$ hydration products.
About 20-25 years later, paper producers developed methods of separating sugars and using them for fabrication of yeasts, the quality of lignosulfonates increased significantly and introduction of such plasticizers in cement during its grinding resulted in getting standard cement strength gain up to 5-10 N/mm², that corresponds in general with the observed reduction of water demand.

Another method of strength increase was introduction into cement during grinding of about 5 weight percent of inoculating crystals for the improvement of the crystallization of two main types of hydrated formation in the structure of hardening cement paste: hydrosilicates and hydroaluminates, - hydrosulfoaluminates of calcium, so-called crystal-forming components, briefly crents. But not very high increase of cement standard cement strength values, about 10 $N/mm^2$, and limited resources of raw materials, in combination with the complexity of the manufacturing technology, prevented organization of commercial production for cement industry.

So, in the beginning of 1980s the problem suddenly arose of the apparent limit in the strength of commercial Portland cement, about 65 $N/mm^2$. To overcome such a limit with the known technical solutions was not possible. Attempts to decrease the fragility of hardened cement paste in construction mortars and concretes by introduction of carbamide-formaldehyde resins, to reduce water requirement of a cement by increasing the value of the uniformity coefficient of particle size distribution in the cement by partial or full separation of fractions larger than 20 $\mu$m, and simultaneously to decrease water demand and fragility of hardened cement paste, for instance, by introduction into the cement of an efficient fragility reducer in an emulsion form, polyvinyl alcohol, while the emulative agent has hydrophobic and plasticizing effects in a cement paste, or by the covering of cement surface with hydrophobizier and simultaneous introduction into the cement of a soft phase, reducing fragility, - technical carbon: - all of these methods showed very limited effects, not exceeding a total increase of the standard strength of cement by about 10-15 $N/mm^2$. A more radical solution with unexpected effect was needed.

Such possibilities appeared after development by R.Hattori in Japan and G.Aignesberger et al. in Germany of superplasticizers. Immediately after that technical solution was offered concerning introduction of water solutions superplasticizers into cement during the grinding thereof in a quantity 0.6 -1 weight percent as calculated for dry substance. As it is known such quantity of superplasticizers, introduced with the mixing water in cement paste or in concrete, reduces their water requirement by about 18-23 weight percent. But introduction into the mill of such a huge quantity of a superplasticizer in a water solution is practically not realizable, because it leads to sudden increase of cement movement along the mill, with a resulting reduction of impact numbers of the balls on each cement particle and a consequent decrease of the specific surface of the ground product. A separator is not able to correct this situation, because circulation cycles of the material in the mill become too numerous the and efficiency ratio of the mill is too low.

The closest to this invention is the hydraulic cement composition comprising: 1) portland type clinker; 2) calcium sulfate in the form of gypsum not over 3% as calculated by $SO_3$, or 6% as calculated by $CaSO_4$ x $2H_2O$; 3) dry modifier, comprising an organic water reducing component, for instance, melamine-formaldehyde type 0.1-1 weight percent and a retarder, in case of necessity, for instance, glucono-deltalactone 0.01-0,1 weight percent. Cement is produced by grinding of the ingredients at a temperature lower than 90°C. This cement is proposed by Guy Pairon (Belgium) for preparing high strength injection grouts for injection of pre-stressed concrete sheaths. The advantage of this technical solution is the very high early compressive strength of the cement - over 30 $N/mm^2$ in 1 day, (the best grouts on Portland cement, up to 25 $N/mm^2$ without chloride accelerators), low water sorption-less than 3.5% by weight (best utilizing on Portland cement at this age have no less than 8%). But this cement does not have a low degree of fragility: relation of flexural strength of grout, 4 $N/mm^2$, to the compressive strength, 30 $N/mm^2$, comprises 13%, which corresponds in general to the relation for ordinary Portland cement.

MAIN CONTENT OF THE INVENTION

This invention has the following purpose: further reduction of the water demand of hydraulic cement , increasing the strength and lowering the fragility for cement pastes, mortars and concretes. For general use, the suggested hydraulic cement of this invention, due to its high strength and reduced fragility, could incorporate up to 65 weight percent of mineral additions in the form of inactive thermally untreated material, or material having low activity, without unduly reducing the strength and fragility of the cement, in comparison with Prior high class Portland cement, for instance, corresponding to class 42.5 by pEN 197.

For the purposes of the invention, the composition of the hydraulic cement of low water demand, high strength and reduced fragility comprising Portland type clinker, calcium sulfate and dry modifier, including an organic water reducing component, in the weight relation (91-97):(2-7):(0.085-4) corresponding further, comprises: Said clinker ingredient in the form of three particle dimension fractions, chemically bonded with the organic water reducing component of dry modifier, said fractions having the following sizes: (I) from 0.05 to 10 $\mu$m, 15.3-34.3 weight percent, (II) from 10.1 to 30 $\mu$m, 37.2-77,5 weight percent, (III) from 30.1 to 80 $\mu$m, 4,2-19,6 weight percent. Said composition also comprises a fourth (IV) dimension fraction of the pure clinker particles having sizes from 80.1 to 200 $\mu$m, free of dry modifier, in a quantity not over 4.9 weight percent;

Said calcium sulfate consists of particle dimension fractions from 0.5 to 15 $\mu$m in a quantity 2-7 weight percent, also free of dry modifier;

Said dry modifier is chemically bonded to the fractions I-III of the clinker ingredient and introduced into each of them in the following quantities: in fraction I 0.045-1.7 weight percent, in fraction II 0.02-2.1 weight percent, in fraction III 0.01-0.2 weight percent. In addition, the dry modifier is present as a separate fraction consisting of its own particles, free of the remaining ingredients, having sizes from 0.3 to 20 $\mu$m in a quantity not over 0.2 weight percent. In all cases, the weight percents of the total cement weight are shown.

This cement is produced by grinding of all ingredients together in the tube type mills grinding and their intimate mixing.

Said three fractions of clinker particles include the dry modifier which is chemically bonded with them. The dry modifier comprises the organic water demand reducing component. All those fraction of clinker particles are conglomerates in which the clinker particles of fine fraction I are covered over their external surfaces by the dry modifier which also is present internal in the defects of structures and in the pores. The particles of the medium fraction II are covered over their external surfaces by the dry modifier which also penetrates the particles to a depth up to 1.5 $\mu$m. The particles of coarse fraction III are covered by the modifier only over the external surface thereof.

In the fraction I the dry modifier fills from 25 to 100% of internal pores of the clinker particles.

The clinker ingredient in the composition of the hydraulic cement in accordance with the invention comprises alite, belite, tricalcium aluminate and calcium aluminoferrites with their following weight relations: (45-75):(0-20):(0.5-12):(4-25) correspondingly.

As a variant, the clinker ingredient in the invention is a white Portland cement clinker.

Calcium sulfate in the composition of the hydraulic cement in accordance with the invention is in the form of calcium sulfate dihydrate, or calcium sulfate hemihydrate, or calcium sulfate anhydrite, or gypsum stone, or material from the group of so-called chemical gypsum, i.e. byproducts of chemical industry: phosphogypsum, borogypsum or titanogypsum.

In a variant of the invention, said calcium sulfate is in the hemihydrate or anhydrate form, obtained from the dehydrated form in the process of intergrinding of the ingredients.

In the last mentioned version of the invention, said calcium sulfate fraction, with a particle size range of 0.5-15 $\mu$m, the particles free of dry modifier, and additionally comprises conglomerate particles, comprising hemihydrate or anhydrate, dehydrated in the process of intergrinding with Portland type clinkers, and dry modifier chemically bonded with the hemihydrated or anhydrated calcium sulfate. The weight relation of the particles of calcium sulfate, free of dry modifier, and the particles bonded with and covered by the modifier over the surface of the particles is as follows, expressed in weight percent: (0.5-3.5):(1.5-4.5) correspondingly.

The dry modifier in the composition of the hydraulic cement according to the invention comprises a mixture of an inorganic part, including an accelerator of cement hardening, for instance, an alkali metal sulfate and/or a gelformer, such as micro-silica, for instance, and also comprises an organic part, containing said water demand reducing component, consisting of: (a) water soluble salts of formaldehyde condensation with products of sulfation of monocyclic or polycyclic aromatic hydrocarbons, or (b) water soluble salts of the products of sulfation of heterocyclic compounds, or (c) water soluble salts of products of sulfation of condensed monocyclic or polycyclic aromatic hydrocarbons.

At the same time groups of compounds (a), (b) or (c) are in the form of polymer, oligomer, monomer, or mixtures thereof, bonded in the process of intergrinding of the ingredients to the external and internal surfaces of the particles of the clinker ingredient in the form of calcium containing chemosorptive associate compounds.

In a variant of the invention, the organic water demand reducing component of the dry modifier is one of the group (a) substances: an alkali or earth-alkali salt of products of the condensation of $\beta$ - naphthalenesulfoacid with formaldehyde, comprising, in parts of its total quantity, not over 0.1 of a polymer fraction with an average-number molecular weight over 2300 Dalton, 0.3-0.6 of an olygomeric fraction with an average-number molecular weight of 1200-2300 Dalton and 0.3-0.6 of a light fraction with an average-number molecular weight 230-1199 Dalton.

In another variant of the invention the organic water demand reducing component of the dry modifier is one of the group (b) substances: an earth-alkali salt of condensated sulfated melamine resin comprising, in parts of its total quantity not over 0.1 of a polymer fraction with an average-number molecular weight over 650 Dalton, 0.4-0.6 of a olygomeric fraction with average-number molecular weight 350-650 Dalton and 0,3-0,5 light fraction with average-number molecular weight 220-349 Dalton.

In the next version of the invention the organic water demand reducing component of the dry modifier is one of the group (c) substances: technical lignosulfonate of an alkali or earth-alkali metal, or the products of its modification, for instance, by the carbamide-formaldehyde resin, characterized by an average-number molecular weight of 15000-25000 Dalton, or a mixture of substances from groups (a) and (c), in particular, mixture of technical lignosulphonate of an alkali or earth-alkali metal with an alkali or earth-alkali salt of the condensate of $\beta$-naphthalenesulfoacid with formaldehyde in a weight relation from 1:1 to 1:3.

In the mineral containing variant composition of the hydraulic cement, the mineral ingredient is: (a) an active silicate-aluminate artificial material like granulated blast furnace slag, or fly ash, or fuel ash, or (b) active silicate-aluminate natural material of the volcanic origin pozzolana type, for instance, volcanic slag, or tuff, or rhyolite, or trass, or (c) artificial filler type material, for instance, quartz sand, or feldspar sand, or limestone, or marble, or loess, or (d) mixture of active material "a-b" and filler "c" in a weight relation from 0.2-1 to 5:1 correspondingly.

In another version of the invention said dry modifier, containing an organic water demand reducing component, comprises additionally a dry accelerator of cement hardening.

In a variant of the invention said organic accelerator of cement hardening is selected from a group consisting of sodium or potassium sulfate, sodium or potassium carbonate, triethanolamine or/and its salts.

According to the variant of the invention, the specific surface of hydraulic cement, determined by the airpermeability method, is not less than 4000 cm2/g.

The named hydraulic cement of improved quality is characterized as well by water content in a paste of normal consistency not over 21.5 weight percent.

The essence of this invention consists in the following. A hydraulic cement proposed contains an organic water demand reducing component of dry modifier in a higher specific quantity just in those dimension fractions of said cement particles, Portland clinker particles in particular, which are usually, i.e. in ordinary Portland cement characterized by the highest water demand and in the first instance start to form, after mixing and reaction with water, the multiwater crystallic hydrate complexes, namely calcium hydroaluminate and hydrosulfoaluminate types which are the most fragile out of all formed cement hydration products, particularly from a fine fraction (less than 10 $\mu$m and in considerable degree from a medium fraction (5-30 $\mu$m). In the composition of this cement the dry modifier is located in and on the said clinker particles fractions but is not located on calcium sulfate particles, except those which are absorbed on the surface of particles of mineral additions. The last, at least, in a first day after mixing of cement with water are not participating in the reactions of formations of the hydration products. Presence of the modifier in big quantities in an area where it is needed for water demand and fragility reducing from the very beginning of the process of hydration products formation excludes participation of the diffusion process and related time factor in the control of mixing water quantity providing for fresh paste, mortar and concrete of any given consistency. This leads to reduction of water demand in the composition of mentioned fresh materials in a greater extent, than is obtainable by introduction of the same quantity of modifier in the composition of the same materials in a aqueous solution.

For instance, using the hydraulic cement in accordance with the invention for making of fresh paste, mortar or concrete of any given consistency in comparison with the nonmodified same cement, the water demand value will be reduce by 25-45%, but if the same quantity of modifier is added in a aqueous solution, just on 18-25%. While, as in the last case, the modifier is needed in big quantities for such water demand reducing pastes, mortars or concretes, and they keep fresh for a long time and harden very slowly, the modifier in the composition of the hydraulic cement according to the invention intensifies the hardening process of these materials and simultaneously reduces theirs fragility after hardening considerably, i.e., the relation of their flexural strength to compressive strength grows.

It has to be taken into account that calcium sulfate participates in creation of new hydrate formations during the process of hardening of the hydraulic cement only after the dissociation of ions $Ca^{2+}$ and $SO_4^{2-}$ and diffusion of these ions in paste, mortar or concrete liquid phases to surfaces of clinker particles. Consequently calcium sulfate is covering reagent in the reactions of sulfate-containing new formations created in the hardening of the mentioned materials. That is why calcium sulfate does not need the presence of modifier on the surface of its particles the diffusion process does not leave the room for the specific action of dry modifier, which is diffusionless, or in other words speaking, is active on contact. Exactly to provide contact action by the blockage of the most water requiring zones of clinker particles the dry modifier in the composition of the hydraulic cement according to the invention exists in the form of chemosorptive complex, i.e., a surface chemical compound with clinker minerals, namely alite and tetracalcium alumoferrite. Such combination of the clinker and modifier acts directly on the quantity of the last after mixing with the water and directly takes a part in the structure of new hydrate formations, created by the hydraulic cement and is characterized by minimum water content and reduced fragility. Analysis of the hydration process of such a cement with chemosorptive modifier shows that mixing water in this composition is used considerably more effective, than in previously known compositions because each weight unit of such a water creates mass of new cement hydrate formations on 25-40% larger. So, tobermorite with normal gross formula $C_6S_5H_6$ in composition of products of hydration of the suggested cement contains less water - it has composition about $C_6S_5H_4$ as it was established by the data of differential thermal analysis (DTA) of mixes $C_3S$ + dry modifier + $H_2O$, prepared after the intergrinding of $C_3S$ and dry modifiers.

Besides that, an organic water reducing component of modifier is bound in the composition of tobermorite in the form of an associate compound which is not extracted from this calcium hydrosilicate after 2 min. boiling in (Na, $K_2$) $CO_3$ aqueous solution fully extracting from any material free organic water reducing components of modifier.

Free modifier's exothermic effects are not seen as on differential curves of DTA of freshly making hydraulic cement to form its products: pastes, mortars, concretes. It is evidence about reconstruction of the associate anhydrous compound, which exists in the ready hydraulic cement in a clinker-modifier contact zone, into another associate hydrate compound in a composition of tobermorite and other products of hydration of said cement. But in the products of hydration of pastes, mortars and concretes, where the modifier is introduced in the form of a water solution, as chemical analysis so DTA confirm the presence of a free modifier due to its characteristic effects or a weakly bonded, it existing only in the calcium hydroaluminate or in the calcium hydrosulfoaluminate phases of hardening cement.

EP 0 877 007 B1

When calcium sulfate has partially or fully been dehydrated in the process of intergrinding, the dry modifier being in contact forms with an associate compound, which chemically conceals the initial calcium sulfate, protecting it from the usual reagents, used in analytical practice for its determination in cement composition. The impression arises that there is no calcium sulfate in the cement, though it is known, that it has been introduced into cement composition. In this case to disclose calcium sulphate cover by modifier it is recommended to ignite this hydraulic cement at 750-850 C, after which, because of thermal destruction of the modifier contained in the cement composition, calcium sulfate could easily be detected by normal methods of analytical chemistry. If the temperature is not so high for disappearing of the concealing effect, it means that the strength of chemical bonds in the said associated compound is much higher than in pure modifier, which is selfignite at 380 - 400° C in a mechanical mixture (but not in a product of intergrinding) with clinker and calcium sulfate. These experiments show that clinker+modifier reaction, with formation of contact organomineral chemosorptive complexes, really occurs, is mechanoactivating and thermodynamically probable, because the obtained organomineral product is more stable than the initial organic combination.

Considering the mechanism of this reaction to make it clear how the required distribution of dry modifier by clinker particle has been achieved by the grinding and its absence in other ingredients, when there are no conditions for dehydration of calcium sulphate in the process of intergrinding.

Accordingly to data of the experiments on separation of samples taken along the tube type mill in the process of intergrinding of the hydraulic cement the chemosorption of the modifier starts mainly on the surface of fine fraction I of the clinker fractions, because only on this fraction do the calcium and oxygen active centres with high adsorptive potential first appear. At overall specific surface of clinker particles 3500-3800 cm2/g, and fine fraction I of the clinker particles content about 20% and over by the weight of cement, the condition arises that provides 100% probability of each-of-them contact with at least any one surface point of the particles fraction II, under the actions of the grinding bodies actions. Thus, the pairs of friction points are formed, consisting of particles of fine and medium fractions. Moreover one particle of medium fraction participates simultaneously in several pairs of friction with the particles of fine fraction. In contact zones of the said pairs of friction in a moment of coimpact with grinding bodies, a chemical reaction begins of the dry modifier's water reducing organic component with calcium and oxygen centres of solid clinker substrate of the surface namely, sulfate-ion of the modifier with the calcium of the surface of the clinker particles; hydrogen bridges of macromolecules of the modifier with the oxygen of the surface of the clinker particles. But at the same time hydroxylic groups, if they are present in the composition of the water reducing component of the modifier, they react as well with the calcium of the surface of the clinker particles. The associate chemosorptive complex of active centres of the surface of the clinker particles with the molecules of the modifier is created. So the continuous process of friction during the coimpacts leads to absorption of the organic molecules of the water reducing component of the modifier and the process of plastic deformation of substrate of the clinker particles, under the external surface of the particles, and to implosion of external modifier into depth of the clinker particles of the fine fraction. The reasons of this phenomenon are the plastic deformation of the fine clinker particles of the final fraction in the contact zone at the coimpacts of the grinding bodies in a mill working volume. The plastic deformation zone occupies the bigger part of the external surface of the fine clinker particles and the value of contact stresses there exceeds the ultimate shear strength of them. Besides that, some medium fraction particles of angular form, especially their emerging angles due to shear stresses, exceeding ultimate values, also "implode" the modifier inside the particles. It is just required because such angular particles of medium fraction are increasing to some extent as well the water demand of the cement. By means of Auger-spectroscopy it was established that the depth of penetration of the modifier into the clinker particles comprises 1.5 to 3 μm. The smaller figure belongs to the fine fraction I of clinker particles, and the larger, to the medium fraction II, where implosion is less developed. Thus, it is necessary and sufficient to create definite conditions of the intergrinding to have the required stationary distribution of the modifier by the dimensions of the clinker particles in the hydraulic cement composition with fixation of the modifier just on the places where it is most needed: in the zones of the surface of the clinker particles with the maximum adsorptive potential, able to produce maximum water demand of cement at the moment of its mixing with water, and then able to lead to maximum fragility of the materials produced on the base of the hydraulic cement.

To provide said distribution, the necessary condition, as it is evident from the statement above, is formation in the process of intergrinding the pair of friction between the particles of fine and medium fractions of the clinker ingredients, and as experiments show it is possible only under the definite particle size distribution in the cement, namely under the weight relation of fraction I to fraction II not less than 1:5 and up to 1:1 approximately.

In the presence of water demand reducing component of the modifier, the water requirement and fragility of the cement do not increase, even in the case of the 1:1 value of this relation, though in this case approximately three times more dry modifier is needed (up to 4%) to cover as external surface and the internal active centres of the fine fraction of the clinker particles, having access to the water when the water is mixed with the cement, than it is needed for the cement with the first value of said relation. Limitation of dry modifier content in the cement by the value 4 mass percent is reasonable, not only economically (the modifier costs 10 times higher than the clinker) but technically as well.

There exists a maximum allowable quantity of the modifier in cement which is equal to sorptive capacity of the clinker ingredient of said specific surface. If the modifier is in the excess of this quantity it remains free in the hydraulic cement. Such free modifier when mixed with the water in the cement, creates obstacles to dissolution of inorganic clinker phases and thus slow down the hardening of the cement. This slow down effect of excessive modifier is revealed to a smaller extent when so-called overgrinding of the cement takes place. In this case, in the process of further grinding of the fine fraction of the clinker particles, the modifier is released directly into the mill in the already processed form as chemosorptive complexes with calcium cations, which were taken by the modifier from the surface of the clinker particles. The experiments show, however, that the fine fraction of the clinker particles in this final stage of grinding is greased by the mono-layer of modifiers from the surface and escapes the impacts of the grinding bodies, and that's why the crushing of the particles of the fine fraction accompanied by the release of part of modifier according to the presented mechanism, is a rare happening. In this connection the content of free and mechanically processed modifier, comprising calcium and affecting the solubility in water of inorganic part of the cement not so noticeably should not be, though, over 0.2 mass percent to provide an accelerated speed of the cement hardening. The free and not processed modifier content should be even less. Besides that, the content of the modifier in the fine fraction of the clinker particles, imploded during intergrinding, could not be higher than the internal porosity of those particles, which is in the range from 8 to 16%. Having the density of the dry modifier on the average of 0.7 g/cm3, the clinker particles' density, around 3.05 g/cm2, and the part of the volume which might be occupied by the modifier, from 6 to 16%, so the quantity of the modifier could comprise $(0.06 \text{ to } 0.16) \cdot \frac{0.7}{3.05} = 0.014$ to 0.036 or from 1.4 to 3.6% of the weight of the fine fraction, or from 0.02 to 1.2 % of the cement weight. In case of plastic strains in the pairs of friction, the volume of defects in the fine fraction of the clinker is increased in average on 40 %, which leads to required quantity of dry modifier increase up to 0.045-1.7 % of the cement weight. The same procedure may be used for the determination of the dry modifier in an intermediate fraction.

The essence of the invention stated above, is confirmed by unexpected phenomena, discovered in the process of work with the cement according to said invention. The first of them is the double heating effect of wetting during its mixing with the water. As it is known in the process of mixing with the water of ordinary known cements there is just one heating effect of wetting, caused by the chemosorption of the water on the surface of the cement particles. When mixing with the water of the suggested cement double heating effect is proved by means of the low-inert micro-calorimeter having resolving ability in 1/10, but if in the inert mixing liquid to separate the fine fraction from the cement, so in this case, without the fine fraction the heating effect became single. To explain this phenomenon separation on different fractions was conducted as well as determination of the modifier content using the method of extraction by a hot water solution $(Na, K)_2CO_3$. The extremes of variation of the modifier's content in the fine and intermediate parts of neat clinker cement, as well as in the clinker fractions of the cement, containing mineral ingredients, were established.

It was shown that the dry modifier is not adsorbed on the surface of any type of mineral ingredients and is not contained inside the particles except hemihydrated gypsum and anhydrite, formed in the process of grinding of dehydrated gypsum.

The double heating effect of wetting may be explained on the basis of the obtained data by the fact that in the clinker fines consequently the external (first effect of heat evolution) and the internal (second effect) surfaces of the clinker particles are wetted, but these two effects are fully divided only in the fine fraction, the internal surface of which is occupied fully by the modifier. In the intermediate fraction such division of effects of heat evolution by wetting is not observed because its internal surface is not occupied fully by the modifier, etc.

As a second unexpected phenomenon the alteration of molecular mass of the modifier's organic component during the intergrinding with the remaining cement ingredients may be considered. Let's illustrate this, in particular, for the case of utilization of modifiers, containing a sodium salt of condensate of naphthalenesulfoacid with formaldehyde. In the mechanical mixture of the ingredients and before the grinding the average - number molecular weight of such commercially available modifier is not less than 1500-1800 Dalton, that corresponds to the oligomer comprising 7-9 monomer units. In a ready hydraulic cement after grinding the organic water reducing component of the modifier, as it was established by the gel-chromatography, has absolutely different mass-molecular distribution: in parts of the total content of the modifier in the cement, not more than 0,1 of polymer fraction with the molecular weight 2300 Dalton is left (4 times less approximately); 0,3-0,6 of olygomer fraction with the molecular weight 1200-2300 Dalton (1,2-2 times less) and light fraction with the molecular weight 230-1199 Dalton appears, which was practically absent before grinding. The modifier in the adsorbed state is changing consequently its mass-molecular distribution, and in this particular case in the direction of its lowering, and this is an optimal mass-molecular distribution, obtained as a result of grinding.

Approximately the same way, the way of destruction, in the composition of hydraulic cement the mass-molecular distribution of the modifier with melamine organic water reducing component is changing, and optimal distribution, obtained by the grinding, is characterized in the following way: not more than 0,1 of polymer fraction with the average-number molecular weight over 650 Dalton; 0,4-0,6 of olygomer fraction with average-number molecular weight 350-650 Dalton and 0,3-0,5 of light fraction with the average-number molecular weight 220-349 Dalton. In an opposite direction and in particular in the direction of increasing of the average-number molecular weight, the mass-molecular distribution of the technical lignosulfonates (LST) in the process of intergrinding of the ingredients is changing. It is expressed, first of all, in increasing of the average-number molecular weight up to 19000-25000 Dalton from 12000-18000 Dalton for the technical lignosulfonates before grinding. Here: 1) the first range of molecular weights for the LST is optimal; 2) commercial technical lignosulfonates are rather low in molecular weight and they contain about 0,2 of the mass in the form of a light fraction with the average-number molecular weight up to 5000 Dalton and which is considered as the retarder for the cement's setting and hardening. But the hydraulic cement, by this invention, even in the case of the use of such lignosulfonates for its manufacture, does not contain a light fraction in a finished product absolutely, and this causes a considerable increase of the speed of the cement hardening and especially of its flexural strength. The modifiers of lignosulfonates normally contribute to the increase of their molecular weight as well by diminishing the light refraction. In this particular case, this is achieved "automatically" during the grinding, and by this reason even non-modified technical lignosulfonates could be used in the composition of said cement. From this the following specific conditions of intergrinding are drawn for the manufacturing of said cement. The clinker, the calcium sulphate and the modifier should be dry, having no more than 3% of moisture by weight, because reaction clinker/ modifier on the contact may be substituted by the thermodynamically more preferable reaction clinker/water. Besides that, the clinker shall not comprise a noticeable quantity of glass characterized by low reactivity and sorptive ability in relation to the modifier partially because of the low porosity. The mineral ingredient shall not contain impurities absorbing the modifier or preventing its contact reaction with the clinker. The most known of such impurities is the clay, or pelitomorfous fraction of flaky alumosilicates, the quantity of which shall not be more than 7 % by weight. If calculated on calcium sulphate it means the possibility of application of low quality gypsum, containing less than 5,0% by weight of clay, or application of loess, in which the quantity of perlite fraction shall not exceed 1/7.

The temperature of the cement in the process of grinding shall not exceed 140-160°C, because the process of the modifier's destruction will be intensified from the group (a) and especially from the group (b) as well as the process of polymerization of the modifiers with the organic water reducing components from the group (c). This will increase their air-entraining ability and may decrease the cement's strength, especially early strength.

Mechanical regime of the mill's operation is of prime importance also. The grinding loading shall be selected having in mind the necessity to have the grinding bodies minimal by weight and the necessity of the fast formation of the fine fraction I of the clinker practically at the beginning of the first chamber of the tube mill. Stationary distribution of the modifier along the cement's fractions, mentioned above, needs the consideration of the differences in the speed of movement of this lightweight component along the mill's length of one of the chambers is more than 3-4 m the length of free movement of the modifier's particles after the coimpacts of the grinding bodies is increasing too fast and appearance of the modifier's waves in the mill excludes fully the required stationary distribution of the modifier in the cement particles. Free openings in the partitions between the chambers in the tube mills shall be reduced up to 3-4 % of the whole partition's area.

From all this follow that it is impossible to get high quality cement without paying attention to all mentioned above circumstances.

But the main consist in the necessity to increase in the process of grinding the surface area the way that to the moment of the first free run of the modifier's particle the pair of friction of the fine and intermediate fractions of clinker ingredient should exist to absorb those particles of modifier which are activated by the first grinding action. Thus grinding diagram for the tube mill is of prime importance. There is a rule for so called intermediate size distribution of the clinker ingredient in the process of hydraulic cement manufacturing according to the invention that says: the surface area of grinding material at the outlet of the first chamber of the tube mill shall be by clinker ingredient 2500-2800 cm2/g, and the quantity of modifier in this cross-section of the mill on 1 cm2 of substrate, e.g. clinker particles, shall not be higher than 1,3 mm3/cm2. This corresponds approximately to 1% by mass (calculated for the organic water reducing component). If for the specific cement 2% of the modifier is required (calculated for the organic water reducing component), so in this specific cross-section of the mill the specific surface area of the clinker component shall be approximately in 1,5 times higher than shown level, keeping in mind the multiplication of the surface defects under the influence of plastic deformations. If 3% of the modifier is required to be introduced (the same way calculated) then the specific surface area in this cross-section of the mill shall be increased in 1,8 times and so on. If those conditions are not taken into account, an excess quantity of the free modifier will be left in the finished product and the quality of the cement will be low. Due to these reasons, the abnormal cement setting found by Guy S.Pairon and discussed in details in his patent was caused not only by the dehydrated gypsum but also by the free modifier, because the modifier reacts immediately with the gypsum in the process of its dehydration during the grinding. There are no such anomalies in the hydraulic cement according to the invention in spite of the modifier, because it is practically fully bound chemically before the overheating of the gypsum leads to its dehydration.

By this way of grinding the hydraulic cement, according to the invention, unlike the known technical solution several conditions are realized to obtain specific granulometry and distribution of the modifier distribution by fractions that allow to guarantee high quality, and in particular, high strength and reduced fragility of the cement, especially in concretes, where a fixed water-cement ratio or water content is not established beforehand.

The essence of the invention will become more clear from the examples of its realization, stated down.

EXAMPLE 1

This example shows high characteristics of hydraulic cement in which cement fractions I-III are bonded to correspondent amount of modifier. The chemical and mineralogical composition of the clinkers used are shown in Table 1. Dihydrate gypsum and naphthalenesulfonate-formaldehyde resin were also used. Cements were made by grinding all the constituents in the tube type mill. Steel balls (in chamber I) and cast iron cylinders (in chamber II) were used as grinding bodies. We have obtained different cement samples by changing relation between the weight of the grinding bodies and the time of milling in each chamber. The cement characteristics are shown in Table 2. The molecular-mass characteristics of the modifier are shown in Table 3. The strength properties of the mortars and concretes based on these cements are given in Table 4.

The results given in Table 4 point out the top strength and low fragility obtained by using the cement composition in accordance with instant invention. These results are achieved due to lower water demand of the cement compositions and alternations of its hydration kinetics that we discussed in this patent description. Comparative samples have water demand more then 20% higher, compressive strength more then 40% lower and fragility more then 25% higher.

EXAMPLE 2

We have made samples of binders having different types of gypsum also, by using the same procedure. Besides, we have used samples of organic water reduced substances characterized by different molecular-mass distribution. Binder compositions and its base physical-chemical properties are given in Tables 5 and 6 as well as test results.

The results given in the table 6 show low water demand and fragility of mortars and concretes that had been made by using cements in accordance with the instant invention. Comparative samples made of the same clinkers had shown next results: by Type I cement - W/C=0.42; slump - 18 cm; compressive strength ($R_{com}$)- 60.0 MPa; $R_{com}$/$R_{ben}$ =1:10; by white cement - W/C=0.34; slump - 4 cm; $R_{com}$=42 MPa; $R_{com}$/$R_{ben}$=1:11. Comparison of comparative samples and samples by instant invention show a significant advantage in favor of the instant invention.

EXAMPLE 3

We can use mineral additions in the hydraulic cement composition up to 65%. Physical-chemical properties of obtained binders are shown in Table 7. Mortar and concrete strengths are shown in Table 8. All the samples have high strength characteristics (20% more than comparative ones) and fine fragility (15% less than comparative ones).

EXAMPLE 4

We can use lignosulfonates (LST) as an organic water reducing component. The average-number molecular weight of these LST must be in range 19000...25000 Dalton (see Table 9 and 10).

EXAMPLE 5

By using the same procedure as in Examples 1-4 we have obtained cements in accordance with the instant invention from new types of organic water reducing components and their mixtures, gypsums, active mineral additions and/or fillers. The physical-chemical properties of these cements are given in Table 11. Mortar and concrete strengths are shown in Table 12. All the data point out significant improvement of the mortar and concrete strengths and fragility (about the same scale as previous examples).

The instant invention may be used for the production of many special purpose cements with high strength and low fragility.

Table 1

| N | Clinker | Mineral composition, % by mass | | | |
|---|---------|--------|--------|--------|---------|
| | | $C_3S$ | $C_2S$ | $C_3A$ | $C_4AF$ |
| 1 | Type 1 | 62 | 19 | 9,0 | 12 |
| 2 | White | 56 | 29 | 12 | 3 |
| 3 | Type 2 | 66,7 | 11,9 | 3,2 | 18,2 |
| 4 | Type 2 | 70 | 0,1 | 4,9 | 25,0 |

Table 1   (continued)

| N | Clinker | Mineral composition, % by mass | | | |
|---|---|---|---|---|---|
| | | $C_3S$ | $C_2S$ | $C_3A$ | $C_4AF$ |
| 5 | Type 1 | 45 | 20 | 12,0 | 23,0 |
| 6 | Type 1 | 70 | 20 | 0,5 | 9,5 |
| 7 | Type 1 | 69,0 | 17,0 | 17,0 | 4,0 |

Table 2

| Number of cement composition | Content of cement, % by mass | | | | | | | | | | | | Specific surface, cm²/g | Setting time, hour-min | |
|---|---|---|---|---|---|---|---|---|---|---|---|---|---|---|---|
| | Clinker (N3, table 1 ) | | | | | Gyp-sum | Modifier, content of cement fractions, % by mass | | | | | | | Initial | End |
| | Total | Fraction | | | | | Total | I | II | III | IY | Free | | | |
| | | I | II | III | IY | | | | | | | | | | |
| 1 | 94 | 34,3 | 39,3 | 19,6 | 0,8 | 2 | 4 | 1,65 | 2,1 | 0,05 | - | 0,2 | 5500 | 1-25 | 4-30 |
| 2 | 97 | 15,3 | 77,5 | 4,2 | - | 2,93 | 0,07 | ,045 | 0,02 | 0,05 | - | - | 4000 | 1-30 | 2-00 |
| 3 | 91 | 33,8 | 37,2 | 18,5 | 1,5 | 5 | 4 | 1,7 | 2,1 | 0,2 | - | - | 5000 | 1-15 | 4-10 |
| 4 | 95 | 28,7 | 49,6 | 12,6 | 4,1 | 3,5 | 1,5 | 0,6 | 0,8 | 0,09 | - | 0,01 | 4500 | 0-50 | 2-40 |
| 5 | 91 | 25,4 | 45,6 | 15,15 | 4,85 | 7,0 | 2,0 | 0,7 | 1,19 | 0,01 | - | 0,1 | 4900 | 1-05 | 2-55 |

EP 0 877 007 B1

Table 3
Molecular-mass distribution at the organic
water reducing component of the modifier
(number correspods to number of the table 2)

| Number as in the table 2 | Content of fractions, mass parts | | | Type of salt (metal name) |
|---|---|---|---|---|
| | Light fraction 230...910 Dahlton | Middle fraction 1200...2100 Dahlton | Polymer fraction more 2300 Dahlton | |
| 1 | 0,55 | 0,40 | 0,05 | Na |
| 2 | 0,45 | 0,50 | 0,05 | K |
| 3 | 0,60 | 0,30 | 0,10 | Ca |
| 4 | 0,39 | 0,60 | 0,01 | Ca |
| 5 | 0,30 | 0,60 | 0,1 | Mg |

Table 4
Characteristics of the hydraulic cement in mortars and concretes
(numbers correspond to numbers of table 2)

| Number as in the table 2 | Water content in the paste of normal consistency | Mortar 1:3 | | | | Concrete | | | | | Memo |
|---|---|---|---|---|---|---|---|---|---|---|---|
| | | W/C ratio | Slump мм | $R_{co}$, МПа, 28 days | $R_{co}/R_{ben}$ | W/C ratio | Density, kg/м³ | Strengths in 28 days | | $R_{co}/R_{ben}$ | |
| | | | | | | | | $R_{co}$, МПа | $R_{ben}$, МПа | | |
| 1 | 18,0 | 0,30 | 108 | 122,6 | 6:1 | 0,29 | 2240 | 151,6 | 24,1 | 6,3:1 | |
| 2 | 22,5 | 0,32 | 110 | 120,5 | 5:1 | 0,30 | 2230 | 148,2 | 22,1 | 6,7:1 | |
| 3 | 20,0 | 0,29 | 107 | 121,7 | 5,5:1 | 0,29 | 2240 | 150,0 | 23,8 | 6,3:1 | |
| 4 | 18,5 | 0,31 | 109 | 124,2 | 5,5:1 | 0,31 | 2250 | 152,9 | 25,9 | 5,9:1 | |
| 5 | 19,0 | 0,30 | 107 | 122,0 | 5:1 | 0,30 | 2260 | 151,5 | 23,0 | 6,6:1 | |

Concrete matrix (cement: sand:gravel) = 1 : 1,5 : 2,1

EP 0 877 007 B1

Table 5.
Results for testing of the cements containing different types of gypsum.

| N | Type of clinker, its quantity in resultant cement, % | Distribution clinker particles over fractions, % by mass | | | | Type of gypsum, its quantity in % by cement mass | Modifier | | | |
|---|---|---|---|---|---|---|---|---|---|---|
| | | I | II | III | IY | | Type and quantity in % by binder mass | Quantity of fractions in parts of binder mass | | |
| | | | | | | | | Light | Middle | Polimer |
| 1 | Tipe 2, 94 | 22,4 | 58,5 | 9,4 | 3,7 | CaSO$_4$x2H$_2$O 4,2 | Type 1; 1,8 | 0,3 | 0,6 | 0,1 |
| 2 | "--" | 15,3 | 54,2 | 19,6 | 4,9 | "--" | "--" | 0,3 | 0,6 | 0,1 |
| 3 | "--" | 34,3 | 52,1 | 6,2 | 1,4 | Gypsum hemihyd.;4,2 | "--" | 0,6 | 0,3 | 0,1 |
| 4 | "--" | 22,0 | 49,3 | 18,9 | 3,8 | Natural gypsum;4,2 | "--" | 0,5 | 0,5 | - |
| 5 | White, 95 | 15,3 | 55,2 | 19,6 | 4,9 | Anhydrate; 3,5 | Type 2; 1,5 | 0,3 | 0,6 | 0,1 |
| 6 | White;95 | 15,9 | 72,5 | 4,2 | 2,4 | Phosphogypsum; 3.5 | "--" | 0,5 | 0,4 | 0,10 |
| 7 | White; 94,5 | 34,3 | 37,2 | 19,6 | 3,4 | CaSO$_4$x2H$_2$O 3,5 | Type 2; 2,0 | 0,4 | 0,5 | 0,1 |
| 8 | Tipe 2;94 | 25,6 | 50,9 | 15,0 | 2,5 | Mixture of boro- and titanogypsum; 4,0 | Ca-salt of polynaphthalensulfonic acid; 2,0 | 0,5 | 0,45 | 0,05 |

Type 1: Na salf of the condensate with formaldehyde of products of sulfation of phenantren.

Type 2: Melamen based modifier: light fraction 220...349 Dalton, middle fraction 350...650 Dalton, polimer fraction - more 650 Dalton.

Table 5 (continuation)

| N | Modifier quantity over cement fractions, % by resultant cement mass | | | | Resultant cement properties | | | |
|---|---|---|---|---|---|---|---|---|
| | Fraction I | Fraction II | Fraction III | Free | Specific surface, $cm^2/g$ | W/C ratio | Initi. set. | End set.. |
| 1 | 0,7 | 0,9 | 0,15 | 0,05 | 4000 | 0,19 | 0-40 | 2-30 |
| 2 | 0,7 | 0,9 | 0,15 | 0,05 | 4200 | 0,20 | 0-50 | 3-10 |
| 3 | 0,05 | 1,7 | 0,05 | - | 4500 | 0,20 | 1-15 | 3-00 |
| 4 | 0,2 | 1,5 | 0,1 | - | 5000 | 0,20 | 1-05 | 2-40 |
| 5 | 0,35 | 1,0 | 0,1 | 0,05 | 5000 | 0,18 | 2-00 | 8-00 |
| 6 | 0,15 | 1,05 | 0,2 | 0,1 | 5200 | 0,17 | 2-15 | 7-10 |
| 7 | 0,9 | 1,05 | 0,05 | - | 5100 | 0,17 | 2-05 | 7-30 |
| 8 | 0,8 | 1,2 | - | - | 5500 | 0,18 | 1-55 | 7-50 |

EP 0 877 007 B1

Table 6
Test results for mortars and concretes made of binders as in the table 5

| N of the binder as in the table 5 | Mortar 1:3 | | | | Concrete mixture and concrete | | | | | |
|---|---|---|---|---|---|---|---|---|---|---|
| | W/C | Slump, mm | Strength in 28 days standard cure, MPa | $\frac{R_{ben}}{R_{com}} \times 10^{-3}$ | W/C | Slump cm | Workability, h | Strength, MPa, 28 days | | |
| | | | | | | | | $R_{com}$ | $R_{ben}$ | $R_{ben}/R_{com}$ |
| 1 | 0,28 | 110 | 118,5 | 145 | 0,28 | 18 | 2,0 | 85,7 | 10,8 | 0,126 |
| 2 | 0,30 | 112 | 117,0 | 150 | 0,35 | 20 | 2,5 | 88,0 | 11,53 | 0,131 |
| 3 | 0,30 | 108 | 116,5 | 153 | 0,35 | 21 | 2,0 | 86,2 | 10,5 | 0,122 |
| 4 | 0,31 | 109 | 121,0 | 162 | 0,36 | 21 | 2,0 | 90,0 | 11,9 | 0,132 |
| 5 | 0,26 | 109 | 62,3 | 128 | 0,31 | 3 | 4,5 | 62,4 | 6,8 | 0,109 |
| 6 | 0,27 | 110 | 64,0 | 131 | 0,30 | 4 | 5,0 | 61,8 | 6,8 | 0,110 |
| 7 | 0,26 | 109 | 63,5 | 130 | 0,31 | 3 | 4,5 | 61,5 | 6,6 | 0,107 |
| 8 | 0,27 | 110 | 66,6 | 127 | 0,31 | 4 | 4,5 | 62,0 | 6,7 | 0,108 |

Table 7

| N | N of cement as in the table 2 | Cement, as in table 2, content in the binder, % by mass | Active mineral addition and/or filler content in the binder, % by mass | | Specific surface, cm²/g | Setting time, hour-min | | Normal consistency of the paste |
|---|---|---|---|---|---|---|---|---|
| | | | Type | Content in the binder, % by mass | | Initial | End | |
| 1 | 2 | 95 | Limestone | 5 | 5500 | 1-10 | 1-50 | 22,7 |
| 2 | 2 | 65 | Slag | 35 | 5000 | 1-40 | 2-20 | 23,2 |
| 3 | 2 | 35 | Sand | 65 | 5500 | 2-15 | 4-05 | 23,8 |
| 4 | 4 | 95 | Marble | 5 | 6000 | 0-50 | 1-55 | 18,5 |
| 5 | 4 | 65 | Fly ash | 35 | 6500 | 1-20 | 2-50 | 18,9 |
| 6 | 4 | 35 | Volcanic ash | 65 | 6500 | 1-50 | 4-15 | 19,8 |
| 7 | 5 | 95 | Loess | 5 | 4000 | 1-30 | 3-15 | 18,1 |
| 8 | 5 | 65 | Trass | 35 | 4500 | 2-00 | 3-40 | 18,4 |
| 9 | 5 | 35 | Tuff | 65 | 7500 | 2-40 | 4-30 | 20,3 |

Table 8

Properties of mortars and concretes made from binders by table 7.

| N | N of cement as in the table 7 | Properties of mortar 1:3 | | | | | Properties of concrete and concrete mixture | | | | |
|---|---|---|---|---|---|---|---|---|---|---|---|
| | | W/C | Slump mm | $R_{com}$ MПa | $R_{ben}$ MПa | $R_{com}/R_{ben}$ | W/C | Slump cm. | $R_{com}$ MПa | $R_{ben}$ MПa | $R_{com}/R_{ben}$ |
| 1 | 2 | 3 | 4 | 5 | 6 | 7 | 8 | 9 | 10 | 11 | 12 |
| 1 | 1 | 0,3 | 109 | 115,0 | 23,0 | 5,0:1 | 0,29 | 2-4 | 145,5 | 22,4 | 6,5:1 |
| 2 | 2 | 0,35 | 110 | 63,4 | 9,6 | 6,6:1 | 0,40 | 2-4 | 82,6 | 13,1 | 6,3:1 |
| 3 | 3 | 0,39 | 110 | 52,2 | 8,0 | 6,5:1 | 0,42 | 2-4 | 69,1 | 11,5 | 6,0:1 |
| 4 | 4 | 0,29 | 108 | 117,1 | 23,9 | 4,9:1 | 0,30 | 2-4 | 151,1 | 26,1 | 5,8:1 |
| 5 | 5 | 0,34 | 109 | 64,1 | 12,1 | 5,3:1 | 0,40 | 2-4 | 83,0 | 13,4 | 6,2:1 |
| 6 | 6 | 0,40 | 108 | 51,0 | 8,0 | 6,4:1 | 0,42 | 2-4 | 68,3 | 11,4 | 6,0:1 |
| 7 | 7 | 0,30 | 108 | 116,3 | 24,2 | 4,8:1 | 0,30 | 2-4 | 150,7 | 23,2 | 6,5:1 |
| 8 | 8 | 0,35 | 108 | 65,9 | 11,6 | 5,7:1 | 0,39 | 2-4 | 83,2 | 13,6 | 6,1:1 |
| 9 | 9 | 0,40 | 110 | 51,7 | 7,9 | 6,5:1 | 0,42 | 2-4 | 68,7 | 10,3 | 6,7:1 |

EP 0 877 007 B1

Table 9

| Number of cement composition | Content of cement, % by mass | | | | | | | | | | | | | Specific surface, cм²/g | Setting time, hour-min | |
|---|---|---|---|---|---|---|---|---|---|---|---|---|---|---|---|---|
| | Clinker | | | | | Gypsum | Modifier, content of cement fractions, % by mass | | | | | | | | | |
| | Total | Fraction | | | | | Total | I | II | III | IY | Free | | | Initial | End |
| | | I | II | III | IY | | | | | | | | | | | |
| 1 | 91,0 | 33,0 | 37,2 | 19,0 | 1,8 | 7,0 | 2,0 | 1,0 | 0,6 | 0,2 | – | 0,2 | | 5500 | 1-20 | 2-40 |
| 2 | 97,0 | 34,3 | 38,3 | 19,6 | 4,8 | 2,915 | 0,085 | 0045 | 0,02 | 0,01 | – | 0,01 | | 4900 | 0-55 | 1-40 |
| 3 | 94,0 | 18,7 | 60,9 | 11,3 | 3,1 | 2,0 | 4,0 | 1,7 | 2,1 | 0,2 | – | – | | 4000 | 0-50 | 1-55 |
| 4 | 97,0 | 15,3 | 77,5 | 4,2 | – | 2,05 | 0,95 | 0,25 | 0,55 | 0,1 | – | 0,05 | | 4500 | 1-05 | 2-10 |

The modifier used is LST having the next average molecular mass:
$N_1$ - 19000 Dalton, N2 - 21000 Dalton, N3 - 23000 Dalton, N4 - 25000 Dalton.

EP 0 877 007 B1

Table 10

| N | N of cement as in the table 9 | Properties of mortar 1:3 | | | | | Properties of concrete and concrete mixture | | | | |
|---|---|---|---|---|---|---|---|---|---|---|---|
| | | W/C | Slump mm | $R_{com}$ MПa | $R_{ben}$ MПa | $R_{com}/R_{ben}$ | W/C | Slump cm. | $R_{com}$ MПa | $R_{ben}$ MПa | $R_{com}/R_{ben}$ |
| 1 | 2 | 3 | 4 | 5 | 6 | 7 | 8 | 9 | 10 | 11 | 12 |
| 1 | 1 | 0,30 | 109 | 119,5 | 23,1 | 5,2:1 | 0,29 | 2-4 | 146,2 | 24,0 | 6,1:1 |
| 2 | 2 | 0,32 | 110 | 118,2 | 22,6 | 5,2:1 | 0,31 | 2-4 | 146,7 | 24,9 | 5,9:1 |
| 3 | 3 | 0,28 | 108 | 120,9 | 23,7 | 5,1:1 | 0,28 | 2-4 | 148,3 | 25,6 | 5,8:1 |
| 4 | 4 | 0,31 | 108 | 121,7 | 24,0 | 5,1:1 | 0,30 | 2-4 | 150,2 | 25,5 | 5,9:1 |

Table 11

| N | Clinker part of cement (as 100 % ) | | | | | Active mineral addition and/or filler | | Accelerator | |
|---|---|---|---|---|---|---|---|---|---|
| | Clinker | | Gypsum | Organic water reducing component (OWRC) | | | | Type | Content, in weight ratio to clinker part of cement |
| | Type | Content in clinker, % by mass | Type and content, % by mass | Type | Content, % by mass | Type | Content, % by mass clinker part of cement | | |
| 1 | I | 95,815 | N.g.,4,1 | A.a. | 0,085 | Slag | 35 | Na$_2$SO$_4$ | 1:100 |
| 2 | I | 92,1 | P.g.,3,9 | A.n. | 4,0 | Sand | 25 | K$_2$SO$_4$ | 1:500 |
| 3 | I | 91,0 | H.g.,7,0 | M1 | 2,0 | Ash | 35 | Na$_2$CO$_3$ | 1:400 |
| 4 | I | 94,2 | B.g.,2,6 | M2 | 3,2 | Д1 | 35 | K$_2$CO$_3$ | 1:150 |
| 5 | I | 96,0 | D.g.,3,5 | M3 | 0,5 | Д2 | 35 | TEA | 1:1000 |
| 6 | I | 97,0 | T.g.,2,0 | M4 | 1,0 | Д3 | 35 | salt TEA | 1:800 |

Memo: A.a. - OWRC based on Na salt of polyacrilic acid; A.n. - OWRC based on products of polycondensation formaldehyde with alkilnaphthalenesulphoacid; M1 - products of polycondensation threecycle aromatic sulphoacids with formaldehyde; M2 - OWRC based on Ca salt of antrathenesulphuric acid: M3 - mixture of A.k. and LST (25000D) in weight relation 2:1; M4 - mixture of A.a. and M1 in weight relation 1,5:1; N.g. - natural gypsum; P.g. - phosphogypsum; H.g. - hemihydrate gypsum; B.g. - borogypsum; D.g. - dihydrate gypsum; T.g. - titanogypsum; A1 - mixture of tuff and limestone at proportion 5:1, correspondenly; A2 - mixture of trass and feldspare sand at propotion 0,2:1, correspondenly; A3 - mixture of slag, tuff and marble at proportion 2:1:1, correspondenly; TEA - triethanolamine.

Table 12
Properties of binders made by table 11, mortars and concretes on their base

| N of the binder as in the table 12 | Resultant cement properties | | | | Properties of mortar 1:3 | | | | | Properties of concrete and concrete mixture | | | | |
|---|---|---|---|---|---|---|---|---|---|---|---|---|---|---|
| | Specific surface, cm²/g | Setting time, hour-min | | W/C ratio % | W/C | Slump mm | $R_{com}$ MПa | $R_{ben}$ MПa | $\dfrac{R_{com}}{R_{ben}}$ x10³ | W/C | Slump cm | $R_{com}$ MПa | $R_{ben}$, MПa | $\dfrac{R_{com}}{R_{ben}}$ |
| | | Initial | End | | | | | | | | | | | |
| 1 | 5000 | 1-55 | 3-40 | 23,0 | 0,34 | 108 | 62,5 | 9,50 | 152 | 0,39 | 2-4 | 81,0 | 10,34 | 7,83 |
| 2 | 5500 | 2-05 | 4-10 | 22,7 | 0,32 | 109 | 64,8 | 9,66 | 149 | 0,38 | 2-4 | 84,5 | 10,74 | 7,87 |
| 3 | 5500 | 2-30 | 4-00 | 21,0 | 0,30 | 109 | 65,0 | 8,45 | 130 | 0,36 | 1-3 | 83,0 | 11,69 | 7,10 |
| 4 | 5100 | 1-30 | 3-50 | 22,7 | 0,22 | 111 | 68,5 | 8,77 | 128 | 0,39 | 1-3 | 85,5 | 12,01 | 7,12 |
| 5 | 5000 | 1-25 | 2-00 | 22,0 | 0,31 | 110 | 63,0 | 8,32 | 132 | 0,38 | 2-4 | 82,0 | 11,25 | 7,29 |
| 6 | 5000 | 1-30 | 2-15 | 22,5 | 0,31 | 110 | 64,0 | 8,51 | 133 | 0,39 | 2-4 | 85,0 | 10,72 | 7,93 |

Memo: Concrete matrix (binder:sand:gravel) as in the table 4.

**Claims**

1. A composition of hydraulic cement comprising Portland cement clinker, gypsum and organic water reducing component (from 91 to 97) : (from 2 to 7) : (from 0.085 to 4.00), respectively, **characterised in that** the Portland cement clinker is composed by three particle fractions bonded with the organic water reducing component, which have the following sizes: fraction I - from 0.05 to 10.00 μm in an amount of 15.3 to 34.3 per cent by weight, fraction II - from 10.01 to 30.00 μm in an amount of 37.2 to 77.4 per cent by weight, fraction III - from 30.01 to 80.00 μm in an amount of 4.2 to 19.6 per cent by weight and a fraction IV of pure clinker particles with sizes above 80 μm, in an amount of 0.1 to 4.8 per cent by mass; the gypsum contains a fraction of particles of sizes from 0.5 to 15.0 μm, which are free of the organic water reducing component; and the organic water reducing component is contained in the three fractions indicated of clinker particles in the following amounts: in fraction I - from 0.045 to 1.7 per cent by weight, en fraction II - from 0.02 to 2.10 per cent by weight and in fraction III - from 0.01 to 0.20 per cent by weight; additionally, it is contained in the form of a separate fraction of particles sized from 0.3 to 20.0 microns, in an amount of 0.01 to 0.20 per cent by mass.

2. Hydraulic cement, according to claim 1, **characterised in that** the Portland cement clinker contains alite, belite tricalcium aluminate and calcium alumoferrite in the following weight ratios: (from 45 to 70) : (from 0.1 to 20.0) : (from 0.5 to 12.0) : (from 4 to 25), respectively.

3. Hydraulic cement, according to claim 1, **characterized in that** white clinker is used as Portland cement clinker.

4. Hydraulic cement, according to claim 1, **characterized in that** gypsum stone, calcium sulphate dihydrate of natural or artificial origin, natural anhydrite and anhydrous calcium sulphate of artificial origin are used as gypsum.

5. Hydraulic cement, according to claims 1-4, **characterized in that** as organic water reducing component, the water soluble salts are used of the products of the polycondensation of sulfated aromatic hydrocarbons and formaldehyde, which have the following content in fractions in relation to the general content of the organic water reducing component : (from 0.01 to 0.10) of the fraction with a numerical average of the molecular mass above 2300 Dalton, (from 0.3 to 0.6) of the fraction with a numerical average of the molecular mass from 1200 to 2300 Dalton, and from 0.3 to 0.6 of the fraction with a numerical average of the molecular mass from 230 to 1199 Dalton.

6. Hydraulic cement, according to claims 1-4, **characterized in that** as organic water reducing component, the neutralized sulphomethyl melamine tar is used, which has the following content in fractions in relation to the general content of the organic water reducing component: from 0.01 to 0.10 of the fraction with a numerical average of the molecular mass above 650 Dalton, from 0.4 to 0.6 of the fraction with a numerical average of the molecular mass from 350 to 650 Dalton, and from 0.30 to 0.50 of the fraction with a numerical average of the molecular mass from 220 to 349 Dalton.

7. Hydraulic cement, according to claims 1-4, **characterized in that** as organic water reducing component, the technical or modified lignosulphates are used, in the form of alkaline or alkaline-earth salts, with a numerical average of the molecular mass from 19000 to 25000 Dalton.

8. Hydraulic cement, according to claims 1-4, **characterized in that** as organic water reducing component, the mixture of the lignosulphonates mentioned with the sulphonated cyclic aromatic hydrocarbon polycondensation products mentioned or with the sulphomethyl melamine tar indicated earlier, are used, in a mass ratio of 1:1 to 1:3, respectively.

9. Hydraulic cement, according to claims 1-8, **characterized in that** it additionally contains an active mineral ingredient and/or a filler material in an amount from approximately 5 to 65% of the weight of the cement.

10. Hydraulic cement, according to claim 9, **characterized in that** it contains, as active mineral ingredient, granulated blast furnace slag, fly ash, natural puzzolanic material of the trass group, volcanic ash or tuff, and as filler material, quartz sand or feldspar sand, limestone, marble or loess.

11. Hydraulic cement, according to claims 9-10, **characterized in that** it contains the mixture of the active mineral ingredients and filler materials mentioned in a weight ratio of 0.2:1 to 5:1, respectively.

12. Hydraulic cement, according to claims 1-11, **characterized in that** it additionally contains a solidification accelerator, in a weight ratio from 1000:1 to 100:1, respectively.

13. Hydraulic cement, according to claim 12, **characterized in that** it contains, as solidification accelerator: potassium or sodium sulfate, sodium or potassium carbonate, triethanolamine or its salt.

14. Hydraulic cement, according to claims 1-13, **characterized in that** it has a specific surface of 4000 to 7500 cm$^2$/g.

15. Hydraulic cement, according to claims 1-14, **characterized in that** it has the normal consistency of a paste with a water content of about 18.0 to 21.5 per cent by weight.


**Patentansprüche**

1. Eine Zusammensetzung von hydraulischem Zement, bestehend aus Portlandzementklinker, Gips und einem organischem wassereinsparenden Bestandteil (von 91 bis 97) : (von 2 bis 7) : (von 0,085 bis 4,00), **gekennzeichnet dadurch, daß** der Portlandzementklinker aus drei Teilchenfraktionen besteht, die an den organischen wassereinsparenden Bestandteil gebunden sind und die die nachstehenden Größen aufweisen: Fraktion I - von 0,05 bis 10,00 µm in einer Menge von 15,3 bis 34,3 Gewichtsprozent, Fraktion II - von 10,01 bis 30,00 µm in einer Menge von 37,2 bis 77,4 Gewichtprozent, Fraktion III - von 30,01 bis 80,00 µm in einer Menge von 4,2 bis 19,6 Gewichtsprozent und eine Fraktion IV aus reinen Klinkerteilchen in Größen von mehr als 80 µm in einer Menge von 0,1 bis 4,8 Prozent der Masse; der Gips enthält eine Fraktion von Teilchen in Größen von 0,5 bis 15,0 µm, die frei von dem organischen wassereinsparenden Bestandteil sind; und der organische wassereinsparende Bestandteil ist in den drei genannten Fraktionen von Klinkerteilchen in den nachstehenden Mengen enthalten: in Fraktion I - von 0,045 bis 1,7 Gewichtsprozent; in Fraktion II - von 0,02 bis 2,10 Gewichtsprozent und in Fraktion III - von 0,01 bis 0,20 Gewichtsprozent; zusätzlich ist er in der Form einer getrennten Fraktion von Partikeln in der Größe von 0,3 bis 20,0 µm in einer Menge von 0,01 bis 0,20 Prozent der Masse enthalten.

2. Ein hydraulischer Zement im Einklang mit Anspruch 1, **gekennzeichnet dadurch, daß** der Portlandzementklinker Alit, Belit, Trikalziumaluminat und Kalziumalumoferrit in den nachstehenden Gewichtsverhältnissen enthält: (von 45 bis 70) : (von 0,1 bis 20,0) : (von 0,5 bis 12,0) : (von 4 bis 25).

3. Ein hydraulischer Zement im Einklang mit Anspruch 1, **gekennzeichnet dadurch, daß** weißer Klinker als Portlandzementklinker verwendet wird.

4. Ein hydraulischer Zement im Einklang mit Anspruch 1, **gekennzeichnet dadurch, daß** Gipsstein, Kalziumsulfatdihydrat natürlichen oder künstlichen Ursprungs, natürlicher Anhydrit und wasserfreies Kalziumsulfat künstlichen Ursprungs als Gips verwendet werden.

5. Ein hydraulischer Zement im Einklang mit den Ansprüchen 1 bis 4, **gekennzeichnet dadurch, daß** als organischer wassereinsparender Bestandteil wasserlösliche Salze der Produkte der Polykondensation von sulfatierten aromatischen Kohlenwasserstoffen und Formaldehyd verwendet werden, die im Verhältnis zu dem Gesamtgehalt des organischen wassereinsparenden Bestandteils den folgenden Gehalt in den Fraktionen haben: von 0,01 bis 0,10 der Fraktion mit einem numerischen Durchschnitt der Molekularmasse über 2300 Dalton, von 0,3 bis 0,6 der Fraktion mit einem numerischen Durchschnitt der Molekularmasse von 1200 bis 2300 Dalton und von 0,3 bis 0,6 der Fraktion mit einem numerischen Durchschnitt der Molekularmasse von 230 bis 1199 Dalton.

6. Ein hydraulischer Zement im Einklang mit den Ansprüchen 1 bis 4, **gekennzeichnet dadurch, daß** als organischer wassereinsparender Bestandteil Sulfomethylmelaminteer verwendet wird, der im Verhältnis zu dem Gesamtgehalt des organischen wassereinsparenden Bestandteils den folgenden Gehalt in den Fraktionen hat: von 0,01 bis 0,10 der Fraktion mit einem numerischen Durchschnitt der Molekularmasse über 650 Dalton, von 0,4 bis 0,6 der Fraktion mit einem numerischen Durchschnitt der Molekularmasse von 350 bis 650 Dalton und von 0,30 bis 0,50 der Fraktion mit einem numerischen Durchschnitt der Molekularmasse von 220 bis 349 Dalton

7. Ein hydraulischer Zement im Einklang mit den Ansprüchen 1 bis 4, **gekennzeichnet dadurch, daß** als organischer wassereinsparender Bestandteil technische oder modifizierte Lignosulfate in Form von alkalischen oder erdalkalischen Salzen mit einem numerischen Durchschnitt der Molekularmasse von 19000 bis 25000 Dalton verwendet werden.

**8.** Ein hydraulischer Zement im Einklang mit den Ansprüchen 1 bis 4, **gekennzeichnet dadurch, daß** als organischer wassereinsparender Bestandteil die Mischung der erwähnten Lignosulfate mit den genannten Produkten der Polykondensation sulfonierter zyklischer aromatischer Kohlenwasserstoffe oder mit dem zuvor genannten Sulfomethylmelaminteer in einem Massenverhältnis von 1:1 bis 1:3 verwndet werden.

**9.** Ein hydraulischer Zement im Einklang mit den Ansprüchen 1 bis 8, **dadurch gekennzeichnet, daß** er zusätzlich einen aktiven Mineralbestandteil enthält und/oder ein Füllmaterial, in einer Menge von 5 bis 65 % des Zementgewichts.

**10.** Ein hydraulischer Zement im Einklang mit Anspruch 9, **gekennzeichnet dadurch, daß** er als aktiven mineralischen Bestandteil granulierte Hochofenschlacke, Flugasche, natürliches puzzolanisches Material der Traßgruppe, vulkanische Asche oder Tuff und als Füllstoff Quarzsand oder Feldspatsand, Kalkstein, Marmor oder Löß enthält.

**11.** Ein hydraulischer Zement im Einklang mit den Ansprüchen 9 bis 10, **gekennzeichnet dadurch, daß** er die Mischung der genannten aktiven mineralischen Bestandteile und Füllstoffe in einem Gewichtsverhältnis von 0,2 : 1 bis 5 : 1 enthält.

**12.** Ein hydraulischer Zement im Einklang mit den Ansprüchen 1 bis 11, **gekennzeichnet dadurch, daß** er zusätzlich einen Verfestigungsbeschleuniger in einem Gewichtsverhältnis von 1000 : 1 bis 100 : 1 enthält.

**13.** Ein hydraulischer Zement im Einklang mit Anspruch 12, **gekennzeichnet dadurch, daß** er als Verfestigungsbeschleuniger Kalium - oder Natriumsulfat, Natrium- oder Kaliumkarbonat, Triethanolamin oder seine Salze enthält.

**14.** Ein hydraulischer Zement im Einklang mit den Ansprüchen 1 bis 13, **gekennzeichnet dadurch, daß** er eine spezifische Oberfläche von 2000 bis 7500 cm$^2$/g enthält.

**15.** Ein hydraulischer Zement im Einklang mit den Ansprüchen 1 bis 14, **gekennzeichnet dadurch, daß** er die normale Konsistenz eines Breis mit einem Wassergehalt von ungefähr von 18,0 bis 21,5 Gewichtsprozent aufweist.

## Revendications

**1.** Composition de ciment hydraulique comprenant du clinker de ciment Portland, du gypse et un composant organique réducteur d'eau (de 91 à 97) : (de 2 à 7) : (de 0,085 à 4) respectivement, **caractérisé par le fait que** le clinker de ciment Portland se compose de trois fractions de particules liées avec le composant organique réducter d'eau et ayant les tailles suivantes : fraction I de 0,05 à 10,00 μm dans une quantité de 15,3 à 34,3 % massiques, fraction II de 10,1 à 30 μm dans une quantité de 37,2 à 77,5 % massiques, fraction III de 30,1 à 80 μm dans une quantité de 4,2 à 19,6% massiques et une fraction IV de particules de clinker pur dont la taille est supérieure à 80 μm dans une quantité de 0,1 à 4,8% massiques ; le gypse contient une fraction de particules dont la taille est comprise entre 0,5 et 15,0 μm, lesquelles sont dépourvues de composant organique réducteur d'eau ; et le composant organique réducteur d'eau est contenu dans les trois fractions indiquées des particules de clinker dans les quantités suivantes : dans la fraction I, de 0,045 à 1,7% massiques, dans la fraction II de 0,02 à 2,1 % massiques et dans la fraction III de 0,01 à 0,2 % massiques ; il est également contenu sous la forme d'une fraction séparée de particules dont la taille est comprise entre 0,3 et 20,0 μm dans une quantité de 0,01 à 0,20% massiques.

**2.** Ciment hydraulique selon la revendication 1, **caractérisé par le fait que** le clinker de ciment Portland contient de l'alite, de la bélite, de l'aluminate de tricalcium et des aluminoferrites de calcium dans les rapports massiques respectifs suivants : (de 45 à 75) : (de 0 à 20) : (de 0,5 à 12) : (de 4 á 25).

**3.** Ciment hydraulique selon la revendication 1, **caractérisé par le fait que** le clinker de ciment Portland utilisé est du clinker blanc.

**4.** Ciment hydraulique selon la revendication 1, **caractérisé par le fait que** le gypse utilisé est de la pierre de gypse, du dihydrate de sulfate de calcium d'origine naturelle ou artificielle, de l'anhydrite naturel et du sulfate de calcium anhydreux d'origine artificielle.

**5.** Ciment hydraulique selon les revendications 1-4, **caractérisé par le fait que** le composant organique réducteur d'eau utilisé est un sel soluble issu des produits de la polycondensation des hydrocarbures aromatiques sulfatés et d'aldéhyde formique qui présentent la teneur en fractions suivante par rapport à la teneur globale du composant organique réducteur d'eau : 0,01 à 0,1 de la fraction dont la masse molaire moyenne est supérieure à 2300 Dalton, 0,3 à 0,6 de la fraction dont la masse molaire moyenne est comprise entre 1200 et 2300 Dalton et 0,3 à 0,6 de la fraction dont la masse molaire moyenne est comprise entre 230 et 1199 Dalton.

6. Ciment hydraulique selon les revendications 1-4, **caractérisé par le fait que** le composant organique réducteur d'eau utilisé est un goudron mélamine sulphométhyle neutralisé qui présentent la teneur en fractions suivante para rapport à la teneur globale du composant organique réducteur d'eau : 0,01 à 0,1 de la fraction dont la masse molaire moyenne est supérieure à 650 Dalton, 0,4 à 0,6 de la fraction dont la masse molaire moyenne est comprise entre 350 et 650 Dalton et 0,3 à 0,5 de la fraction dont la masse molaire moyenne est comprise entre 220 et 349 Dalton.

7. Ciment hydraulique selon les revendications 1-4, **caractérisé par le fait que** le composant organique réducteur d'eau utilisé est un lignosulfate technique ou modifie sous la forme d'un sel alcalin ou terra-alcalin dont la masse molaire moyenne est comprise entre 19000 et 25000 Dalton.

8. Ciment hydraulique selon les revendications 1-4, **caractérisé par le fait que** le composant organique réducteur d'eau utilisé est un mélange des lignosulfates mentionnés avec les produits de la polycondensation des hydrocarbures aromatiques cycliques sulfatés mentionnés ou avec le goudron mélamine sulphométhyle indiqué précédemment dans un rapport massique entre 1 :1 et 1 :3, respectivement.

9. Ciment hydraulique selon les revendications 1-8, **caractérisé par le fait qu'**il contient en plus un ingrédient minéral actif et/ou un matériau d'apport dans une quantité égale à environ 5 à 65% de la masse du ciment.

10. Ciment hydraulique selon la revendication 9, **caractérisé par le fait que** l'ingrédient minéral actif qu'il contient est du laitier de haut fourneau en granulés, de la suie, du matériel puzzolanique naturel du groupe des trass, de la cendre ou du tuf volcanique et que le matériau d'apport est du sable de quartz ou du sable de feldspath, du calcaire, du marbre ou du loess.

11. Ciment hydraulique selon les revendications 9-10, **caractérisé par le fait qu'**il contient le mélange des ingrédients minéraux actifs et des matériaux d'apports mentionnés dans un rapport massique respectif compris entre 0,2 :1 et 5 :1.

12. Ciment hydraulique selon les revendications 1-11, **caractérisé par le fait qu'**il contient en plus un accélérateur de solidification rapport massique respectif compris entre 1000 :1 et 100 :1.

13. Ciment hydraulique selon la revendication 12, **caractérisé par le fait qu'**il contient, comme accélérateur de solidification, du sulfate de potassium ou de sodium, du carbonate de sodium ou de potassium, du triéthanolamine ou son sel.

14. Ciment hydraulique selon les revendications 1-13, **caractérisé par le fait qu'**il possède une surface spécifique de 4000 à 7500 cm$^2$/g.

15. Ciment hydraulique selon les revendications 1-14, **caractérisé par le fait qu'**il présente la consistance normale d'une pâte ayant une teneur en eau d'environ 18,0 à 21,5 % massiques.